# EUROPÄISCHE PATENTANMELDUNG

(11) **EP 0 956 976 A2**
(43) Veröffentlichungstag der Anmeldung: **17.11.1999**
(21) Anmeldenummer: 99109534.0
(22) Anmeldetag: 12.05.1999
(51) Int. Cl.: B60B 7/00, B60B 7/01

(54) **Leichtmetall-Felge für ein Kraftfahrzeug**

(30) Priorität: 12.05.1998 DE 19821168
(71) Anmelder: Volkswagen Aktiengesellschaft, 38436 Wolfsburg (DE)
(72) Erfinder: Von Harlessem, Jobst, 38350 Helmstedt (DE)

(57) **Zusammenfassung**

Die Erfindung betrifft eine Leichtmetall-Felge für ein Kraftfahrzeug, mit einem Felgenbett mit einem äußeren und einem inneren Felgenhorn und einer Speichen aufweisenden Radscheibe. Um Beschädigungen des äußeren Felgenhornes durch Anfahren an Hindernisse weitgehend zu vermeiden, ist erfindungsgemäß im Bereich des äußeren Felgenhornes (3) und des sich anschließenden Bereiches des Felgenbettes (2) an der Außenseite der Felge (1) ein Ring (7) angeordnet, der lösbar mit dieser verbunden ist.

## Beschreibung

Die Erfindung betrifft eine Leichtmetall-Felge für ein Kraftfahrzeug mit einer Speichen aufweisenden Radscheibe.

Leichtmetall-Felgen für Kraftfahrzeuge lösen in steigendem Maße Stahl-Felgen ab, nicht zuletzt wegen ihres Erscheinungsbildes. Dieses wird wesentlich durch die Konstruktion der Felge bestimmt, insbesondere dadurch, ob die Felge einteilig oder mehrteilig aufgebaut ist. Leichtmetall-Felgen sind jedoch teuerer als Stahl-Felgen, so daß Beschädigungen durch Anfahren an ein Hindernis, insbesondere durch Anfahren an Bordsteine, stärker zu Buche schlagen als bei Stahl-Felgen. Insbesondere bei einem größeren Felgenradius in Verbindung mit niedrigeren Reifen und des damit verbundenen Nachaußenrückens des äußeren Felgenhornes ist die Gefahr einer Beschädigung dieses Felgenhornes und des sich anschließenden Felgenbereiches erhöht.

Bei mehrteiligen Leichtmetall-Felgen bietet sich jedoch die Möglichkeit, lediglich den beschädigten Teil der Felge, in der Regel den Teil, an dem das äußere Felgenhorn ausgebildet ist, auszutauschen, was jedoch auch noch mit erheblichen Kosten verbunden sein kann. Derartige Felgen-Konstruktionen sind beispielsweise aus der DE 33 16 738 A1 und der DE 38 22 852 A1 bekannt. Die Leichtmetall-Felge nach der DE 33 16 738 A1 besteht aus einem Radteller (Radscheibe) und einem mit diesem lösbar verbundenen Felgenbett. Dabei weist das Felgenbett einen in radialer Richtung zur Achse des Radtellers hin ausgebildeten umlaufenden Steg zur Überlappung und Verschraubung mit dem umfangsseitigen Randbereich des Radtellers auf, wobei neben den kraftschlüssigen Schraubverbindungsmitteln zur Verbeserung der Dauerstandsfestigkeit derselben Mittel zur formschlüssigen Verbindung vorgesehen sind. Die Schraubverbindungsmittel sind an der Außenseite der Felge sichtbar und bestimmen somit deren Erscheinungsbild mit. Bei einer sichtbaren Beschädigung des äußeren Felgenhornes - auch wenn diese nur das äußere Erscheinungsbild der Felge verschlechtern und nicht die Felgenfunktion beeinträchtigen - muß zur Wiederherstellung des gewünschten ästhetischen Effektes bei dieser Konstruktion das gesamte Felgenbett mit einem erheblichen Aufwand ausgetauscht werden.

Die Leichtmetall-Felge nach der DE 38 22 852 A1 ist aus einer Radscheibe mit einem zur Radinnenseite einstückig angeformten Felgenring mit einem inneren Felgenhorn als Bestandteil des Felgenbettes und einem mit der Radscheibe radaußenseitig verbundenen Ring mit einem äußeren Felgenhorn gebildet. Der Ring ist an die Radscheibe angeschraubt.< Auch bei dieser Felge sind die Verbindungsschrauben von der Außenseite zugänglich. Wird das äußere Felgenhorn beschädigt, braucht nur dieser Ring ausgetauscht zu werden, was jedoch auch noch aufwendig ist.

Es ist Aufgabe der Erfindung, eine Leichtmetall-Felge nach dem Oberbegriff des Anspruchs 1 zu schaffen, bei der Beschädigungen des äußeren Felgenhornes und des sich anschließenden Felgenbereiches durch Anfahren an Hindernisse weitgehend vermieden werden.

Diese Aufgabe wird bei einer Leichtmetall-Felge nach dem Oberbegriff des Anspruchs 1 durch dessen kennzeichnende Merkmale gelöst. Danach ist bei einer aus einem Felgenbett mit einem äußeren und einem inneren Felgenhorn und aus einer Speichen aufweisenden Radscheibe bestehenden Leichtmetall-Felge erfindungsgemäß im Bereich des äußeren Felgenhornes und des sich anschließenden Bereiches des Felgenbettes an der Außenseite der Felge ein Ring angeordnet und lösbar mit der Felge verbunden. Dieser Ring vermindert inerheblichem Maße die Gefahr einer Beschädigung der Felge im Bereich des äußeren Felgenbettes, die durch Anfahren an ein Hindernis, beispielsweise eine Bordsteinkante, verursacht wird und trägt damit zu einer Standzeiterhöhung der Felge bei. Der beschädigte Ring wird auf einfache Weise ausgetauscht, ohne daß die Felge selbst demontiert werden muß.

Durch die Gestaltung des Ringes und die gegebene Vielzahl von Gestaltungsmöglichkeiten kann so auch auf einfache Weise das Erscheinungsbild der Felge verändert werden und diese - auch nach den Wünschen des Nutzers - an ein Fahrzeug angepaßt werden.

Dabei kann der Ring Ansätze aufweisen, die in den Bereich des Felgenbettes zwischen den Speichen hineinreichen und diesen Bereich vollständig überdecken.

Im Bereich der Speichen kann der Ring schmal ausgebildet sein und lediglich den in radialer Richtung gegebenen Bereich zwischen dem Felgenhorn und dem Ansatz der Speichen überdecken. Dadurch wird der Durchmesser der Felge scheinbar vergrößert, was dem ästhetischen Empfinden einer Vielzahl von Nutzem entgegenkommt.

Der Ring kann durch Schraub- oder Rastverbindungselemente mit der Felge verbunden sein, vorzugsweise durch Befestigungsschrauben, die ergänzend zu den vorstehenden Ausführungen durch ihre Anzahl, Anordnung und Größe eine weitere Möglichkeit einer Einflußnahme auf das optische Erscheinungsbild der Felge bieten.

Diese Schraubverbindungselemente werden vorteilhaft im Bereich zwischen den Speichen vorgesehen, so daß sie damit nicht über den Ring nach außen hinausstehen.

Der Ring sollte vorzugsweise aus einem Werkstoff mit hoher Festigkeit gefertigt sein, um selbst mechanischen Reibungs- und Stoßbelastungen standhalten zu können, insbesondere jedoch, um den Schutz des äußeren Felgenhornes sicherstellen zu können. Als Materialien eignen sich Leichtmetalle, insbesondere Aluminium, schlagzähe Kunststoffe, Edelstahl und auch Vebundwerkstoffe, beispielsweise mit Kohlenstoffasern. Die Verwendung von geeigneten Kunststoffen und Verbundwerkstoffen bringt zusätzlich den Vorteil einer Einfärbungsmöglichkeit mit sich, um besondere optische Effekte zu erzielen.

Die Erfindung wird nachstehend anhand eines Ausführungsbeispiels erläutert. In der zugehörigen Zeichnung zeigen:
- Fig. 1:: eine erfindungsgemäße Leichtmetall-Felge mit einem an dieser anordbaren Ring,
- Fig. 2:: die Felge mit angeordnetem Ring,
- Fig. 3a:: einen Radialschnitt durch die Felge im Bereich zwischen zwei Speichen und
- Fig. 3b:: einen Radialschnitt durch die Felge im Bereich einer Speiche.

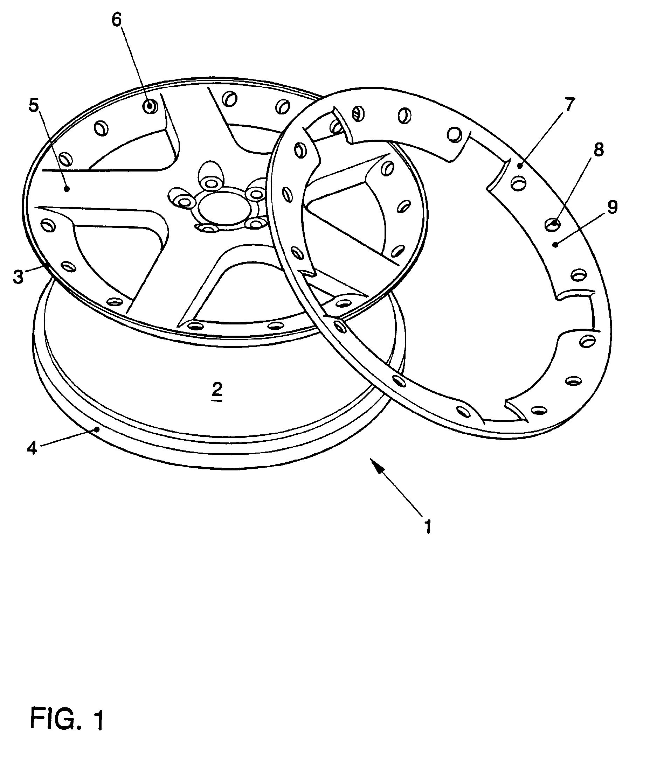

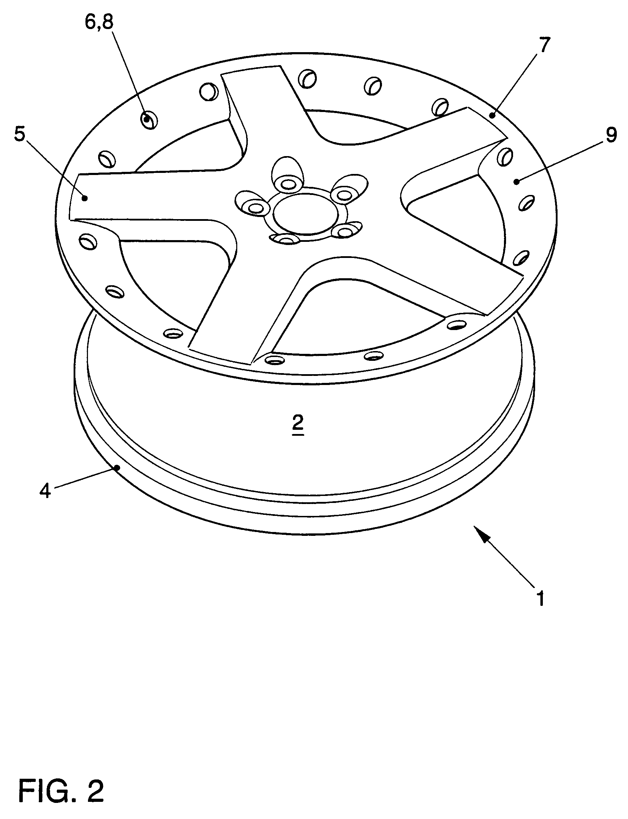

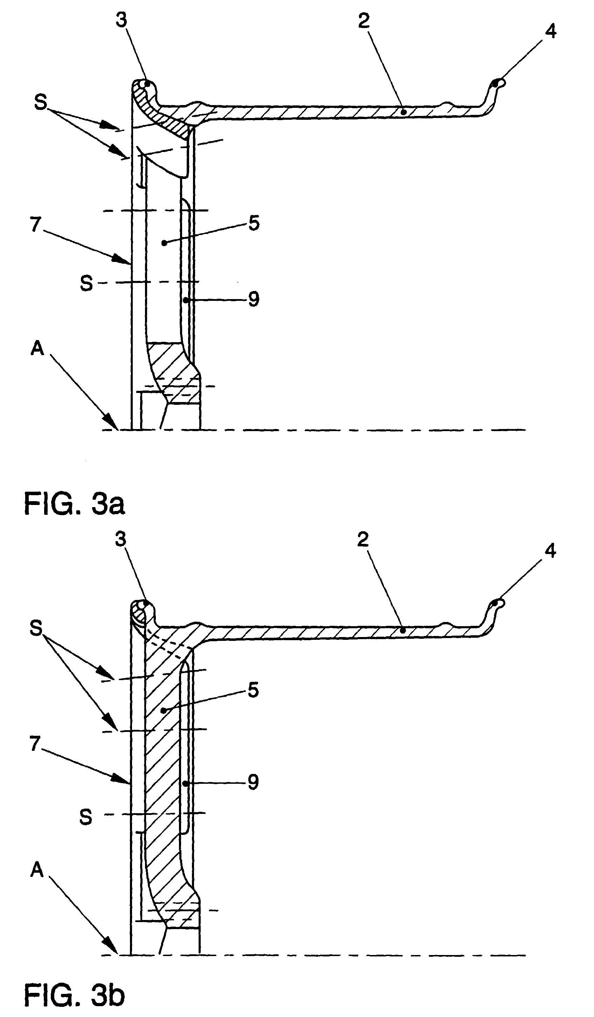

In Fig. 1 ist eine einteilige Leichtmetallfelge 1 dargestellt, die ein Felgenbett 2 mit einem äußeren Felgenhorn 3 und einem inneren Felgenhorn 4 und fünf Speichen 5, die Bestandteil einer Radscheibe sind, aufweist. Zwischen den Speichen 5 sind Gewindebohrungen 6 für Befestigungsschrauben (nicht dargestellt) angeordnet. Weiterhin dargestellt ist ein Ring 7 aus Edelstahl zur Anordnung an der Leichtmetall-Felge 1. Dieser weist mit den Gewindebohrungen 6 korrespondierende Bohrungen 8 zum Durchführung der Befestigungsschrauben, mit denen er an der Felge befestigbar ist, und Ansätze 9 auf.

Fig. 2 zeigt die Felge mit dem vorbestimmt positionierten Ring. In dieser vorbestimmten Position überdeckt der Ring 7 an der Außenseite der Leichtmetall-Felge 1 das äußere Felgenhorn 3 und den sich nach innen zu anschließenden Bereich des Feigenbettes 2 sowie mit den Ansätzen 9 den Bereich des Felgenbettes 2 zwischen den Speichen 5. Im Bereich der Speichen 5 ist der Ring 7 schmal und überdeckt gerade den Bereich zwischen dem Felgenhorn 3 und dem Ansatz der Speichen 5.

Die Fig. 3a und 3b zeigen die Leichmetallfelge 1 jeweils in einem Radialschnitt, Fig. 3a zwischen den Speichen 5 und Fig. 3b durch eine Speiche 5. In Fig. 3a ist zu erkennen, daß der Ring 7 felgenbettseitig das Profil des Felgenbettes 2 aufweist, und das äußere Felgenhorn 3 an der Außenseite der Felge vollständig überdeckt. In Fig. 2b ist zu sehen, daß der Ring 7 im Bereich der geschnittenen Speiche 5 gerade das Felgenhorn und den Bereich bis zum Speichenanstz überdeckt. Die Ansätze 9 sind so bemessen, daß sie den Bereich zwischen den Speichen 5 vollständig ausfüllen. Die Befestigungsschrauben sind jeweils durch die Achsen S angedeutet.

## Patentansprüche

1. Leichtmetall-Felge für ein Kraftfahrzeug, mit einem Felgenbett mit einem äußeren und einem inneren Felgenhorn und einer Speichen aufweisenden Radscheibe, **dadurch gekennzeichnet**, daß an der Außenseite der Felge (1) im Bereich des äußeren Felgenhornes (3) und des sich anschließenden Bereiches des Felgenbettes (2) ein Ring (7) angeordnet ist, der lösbar mit der Felge (1) verbunden ist.

2. Leichtmetall-Felge nach Anspruch 1, **dadurch gekennzeichnet**, daß der Ring (7) Ansätze (9) aufweist, die jeweils den Bereich des Felgenbettes (2) zwischen den Speichen (5) überdecken.

3. Leichtmetall-Felge nach Anspruch 1 oder 2, **dadurch gekennzeichnet**, daß der Ring (7) im Bereich der Speichen (5) schmal ist und maximal den Bereich zwischen dem Speichenansatz und dem Felgenhorn (3) überdeckt.

4. Leichtmetall-Felge nach Anspruch 1, **dadurch gekennzeichnet**, daß der Ring (7) durch Schraub- oder Rastverbindungsmittel an der Felge (1) befestigt ist.

5. Leichtmetall-Felge nach Anspruch 4, **dadurch gekennzeichnet**, daß die Schraubverbindungsmittel im Bereich zwischen den Speichen (5) vorgesehen sind.

6. Leichtmetall-Felge nach einem der Ansprüche 1 bis 4, **dadurch gekennzeichnet**, daß der Ring (7) aus einem Werkstoff mit hoher Festigkeit, vorzugsweise aus Leichtmetall, Kunststoff, Edelstahl oder einem Verbundwerkstoff gefertigt ist.
